# EUROPÄISCHE PATENTSCHRIFT

(11) **EP 3 268 678 B1**
(45) Veröffentlichungstag und Bekanntmachung des Hinweises auf die Patenterteilung: **18.12.2019**
(21) Anmeldenummer: 16707730.4
(22) Anmeldetag: 02.03.2016
(51) Int. Cl.: F24S 30/425, F24S 25/10, F24S 25/617

(54) **TRAGEINRICHTUNG FÜR SOLARMODULE, PHOTOVOLTAIKAUFSTELLUNG MIT MEHREREN TRAGEINRICHTUNGEN UND VERFAHREN ZUM AUFSTELLEN EINER SOLCHEN TRAGEINRICHTUNG**
SUPPORT DEVICE FOR SOLAR MODULES, PHOTOVOLTAIC SETUP HAVING MULTIPLE SUPPORT DEVICES AND METHOD FOR SETTING UP SUCH A SUPPORT DEVICE
DISPOSITIF SUPPORT POUR MODULES SOLAIRES, INSTALLATION PHOTOVOLTAÏQUE PRÉSENTANT PLUSIEURS DISPOSITIFS SUPPORT ET PROCÉDÉ POUR INSTALLER UN TEL DISPOSITIF SUPPORT

(30) Priorität: 10.03.2015 DE 202015101195 U; 27.07.2015 DE 202015103930 U
(43) Veröffentlichungstag der Anmeldung: 17.01.2018
(73) Patentinhaber: Rainer, Christian, 94469 Deggendorf (DE)
(72) Erfinder: RAINER, Johann, 84164 Moosthenning (DE)
(74) Vertreter: Benninger, Johannes
(86) Internationale Anmeldenummer: PCT/EP2016/054374
(87) Internationale Veröffentlichungsnummer: WO 2016/142227

(56) Entgegenhaltungen:
- EP-A1- 2 280 421
- DE-U1-202010 014 899
- ES-U- 1 119 081
- KR-A- 20110 048 497
- US-A1- 2012 073 563
- US-A1- 2013 269 752

## Beschreibung

Die vorliegende Erfindung betrifft eine aus mehreren Teilen gebildete Trageinrichtung.

Aus mehreren Teilen gebildete Trageinrichtungen für Schwenkachsen von Solarmodulen sind bereits aus dem Stand der Technik bekannt. So sind in der Praxis sog. IPE-Träger vorgesehen. Sollen derartige Träger in einer Bodenfläche installiert werden, sind hierzu Bohrlöcher auszuheben, welche anschließend rückverfüllt und verdichtet werden, worauf der Träger kraftbeaufschlagt in den Boden eingebracht wird.

Eine Installation von Photovoltaikaufstellungen mit derartigen Trägern ist daher mit einem hohen Zeitaufwand verbunden und kostenintensiv bzw. wirtschaftlich aufwändig.

Eine Aufgabe der Erfindung kann aus diesem Grunde darin gesehen werden, eine Trageinrichtung, eine Photovoltaikaufstellung sowie ein Verfahren zum Aufstellen einer für Schwenkachsen von Solarmodulen vorgesehenen Trageinrichtung zur Verfügung zu stellen, welche die obig genannten Nachteile zumindest teilweise nicht aufweisen.

Die obige Aufgabe wird durch eine Trageinrichtung, eine Photovoltaikaufstellung und ein Verfahren gelöst, welche die Merkmale in den Ansprüchen 1, 9 und 10 aufweisen. Bevorzugte Ausführungsformen werden durch die abhängigen Ansprüche beschrieben.

ES 1 119 081 U offenbart eine aus mehreren Teilen gebildete Trageinrichtungen für Schwenkachsen von Solarmodule gemäß dem Oberbegriff des Anspruchs 1.

Die Erfindung betrifft eine aus mehreren Teilen gebildete Trageinrichtung für Schwenkachsen von Solarmodulen. Die Trageinrichtung weist wenigstens einen ersten Stützfuß und wenigstens einen zweiten Stützfuß auf, die jeweils zur Verankerung in einer Bodenfläche ausgebildet sind. Der wenigstens eine erste Stützfuß und/oder der wenigstens eine zweite Stützfuß kann in denkbaren Ausführungsformen einen kreisrunden Querschnitt besitzen. Hinsichtlich ihrer Geometrie und Dimensionierung können der wenigstens eine erste Stützfuß und der wenigstens eine zweite Stützfuß identisch ausgebildet sein.

Die Trageinrichtung umfasst zudem eine Brücke, welche den wenigstens einen ersten Stützfuß mechanisch an den wenigstens einen zweiten Stützfuß koppelt sowie ein Lager, welches zur Aufnahme einer Schwenkachse ausgebildet ist. Das Lager wird hierbei von der Brücke getragen. Weiter sind der wenigstens eine erste Stützfuß und der wenigstens eine zweite Stützfuß lösbar mit der Brücke verbunden. Denkbar ist beispielsweise, dass der wenigstens eine erste Stützfuß und der wenigstens eine zweite Stützfuß formschlüssig via die Brücke aufgenommen sind.

In denkbaren Ausführungsformen kann die Brücke somit für den wenigstens einen ersten Stützfuß und den wenigstens einen zweiten Stützfuß jeweils eine Aufnahme ausbilden, in welche jeweilige Aufnahme der wenigstens eine erste Stützfuß und der wenigstens eine zweite Stützfuß formschlüssig oder im wesentlichen formschlüssig eingesteckt werden können.

Der wenigstens eine erste Stützfuß und/oder der wenigstens eine zweite Stützfuß bilden jeweils an ihrem in Richtung weg der Brücke weisenden freien Endbereich ein Gewinde aus. Weiter können der wenigstens eine erste Stützfuß und/oder der wenigstens eine zweite Stützfuß in Richtung ihres jeweiligen in Richtung weg der Brücke weisenden freien Endbereichs spitz zulaufen, wodurch ein Einbringen bzw. eine Verankerung des wenigstens einen ersten Stützfußes und/oder des wenigstens einen zweiten Stützfußes in einer Bodenfläche vereinfacht wird. Das Gewinde ist sinnvollerweise zum Eindrehen des wenigstens einen ersten Stützfußes und/oder des wenigstens einen zweiten Stützfußes in eine Bodenfläche ausgebildet.

Außerdem kann es sein, dass die Trageinrichtung mindestens einen an der Brücke befestigbaren Klemmbügel umfasst, über welchen der wenigstens eine erste Stützfuß und/oder der wenigstens eine zweite Stützfuß kraftbeaufschlagt an der Brücke festgesetzt werden kann. Der wenigstens eine Klemmbügel kann zum formschlüssigen Aufnehmen des wenigstens einen ersten Stützfußes und/oder des wenigstens einen zweiten Stützfußes ausgebildet sein. In denkbaren Ausführungsformen kann für den wenigstens einen ersten Stützfuß und den wenigstens einen zweiten Stützfuß jeweils mindestens ein eigener Klemmbügel vorgesehen sein. Der wenigstens eine erste Stützfuß und der wenigstens eine zweite Stützfuß können sodann über ihren jeweiligen eigenen Klemmbügel kraftbeaufschlagt an der Brücke festgesetzt werden. Auch ist vorstellbar, dass der mindestens eine Klemmbügel an der Brücke schwenkbar gelagert ist und zum kraftbeaufschlagten Festsetzen des wenigstens einen ersten Stützfußes und/oder der wenigstens einen zweiten Stützfußes an der Brücke in einer bestimmten Schwenkposition fixiert wird.

Zudem kann mindestens ein vorzugsweise als Schraubverbindung ausgebildetes Fixierungsmittel vorgesehen sein, mittels dessen der Klemmbügel zur kraftbeaufschlagten Festsetzung des wenigstens einen ersten Stützfußes und/oder des wenigstens einen zweiten Stützfußes an der Brücke in einer bestimmten Klemmposition gehalten werden kann.

Bewährt haben sich zudem Ausführungsformen, bei welchen das Lager lösbar an der Brücke festgesetzt werden kann. Denkbar sind beispielsweise Rast- Schnapp- und//oder Klemmverbindungen, mittels welcher das Lager lösbar an der Brücke festsetzbar ist. Insbesondere kann das Lager via mindestens eine Schraubverbindung lösbar an der Brücke festgesetzt sein.

Die Brücke koppelt mechanisch den wenigstens einen ersten Stützfuß gegenüber dem wenigstens einen zweiten Stützfuß geneigt zueinander. Die Längsachsen des wenigstens einen ersten Stützfußes und des wenigstens einen zweiten Stützfußes können somit geneigt zueinander orientiert sein. Insbesondere haben sich Ausführungsformen bewährt, bei welchen der wenigstens eine erste Stützfuß und der wenigstens eine zweite Stützfuß bei geneigter Koppelung miteinander einen Winkel einschließen, welcher zwischen 0° und 90° und bevorzugt zwischen 10° und 35° festgesetzt ist. Weiter kann der Winkel nicht mehr als 25° und nicht weniger als 15° betragen.

Zudem kann die Brücke als aus wenigstens zwei Gehäuseteilen umfassende Formschale ausgebildet sein, welche wenigstens zwei Gehäuseteile eine korrespondierende Aufnahme zur formschlüssigen Verbindung des wenigstens einen ersten Stützfu ßes und/oder des wenigstens einen zweiten Stützfu ßes mit der Brücke bereitstellen.

Weiter kann der wenigstens eine erste Stützfuß und/oder der wenigstens eine zweite Stützfuß als Hohlrohr ausgebildet sein. Der wenigstens eine erste Stützfuß und/oder der wenigstens eine zweite Stützfuß kann hierbei, wie vorhergehend bereits erwähnt, einen kreisrunden Querschnitt besitzen.

Die Erfindung betrifft zudem eine Photovoltaikaufstellung. Die Photovoltaikaufstellung umfasst eine Vielzahl an Solarmodulen sowie mindestens eine Schwenkachse, an welche die Solarmodule fixiert sind sowie mehrere Trageinrichtung gemäß einer Ausführungsform oder mehreren Ausführungsformen der voranstehenden Beschreibung. Die mindestens eine Schwenkachse ist via die Lager der mehreren Trageinrichtungen aufgenommen.

Weiter betrifft die Erfindung ein Verfahren zum Aufstellen einer für Schwenkachsen von Solarmodulen vorgesehenen Trageinrichtung. Merkmale, welche vorhergehend bereits zur Trageinrichtung beschrieben wurden, können ebenso bei nachfolgend beschriebenem Verfahren vorgesehen sein. Zudem können nachfolgend beschriebene Merkmale, welche das Verfahren betreffen, bei vorhergehend beschriebener Trageinrichtung vorgesehen sein und werden daher nicht redundant erwähnt.

Im Rahmen des Verfahrens wird wenigstens ein erster Stützfuß in einer Bodenfläche verankert. Weiter wird wenigstens ein zweiter Stützfuß in einer Bodenfläche verankert. In einem nachfolgenden Schritt wird der wenigstens eine erste in der Bodenfläche verankerte Stützfuß mit dem wenigstens einen zweiten in der Bodenfläche verankerten Stützfuß über eine Brücke mechanisch gekoppelt, welche ein Lager zur Aufnahme einer Schwenkachse trägt und/oder an welche ein Lager zur Aufnahme einer Schwenkachse befestigt wird.

Der wenigstens eine erste Stützfuß und/oder der wenigstens eine zweite Stützfuß bilden im Bereich eines jeweiligen freien Endes ein Gewinde bzw. Schraubgewinde aus, über welches jeweilige Gewinde der wenigstens eine erste Stützfuß und/oder der wenigstens eine zweite Stützfuß zur Verankerung in die Bodenfläche eingedreht werden.

Weiter kann vorgesehen sein, dass zur mechanischen Koppelung mindestens ein Klemmbügel an der Brücke festgesetzt wird, woraus resultierend der wenigstens eine erste Stützfuß und/oder der wenigstens eine zweite Stützfuß kraftbeaufschlagt über den mindestens einen an der Brücke festgesetzten Klemmbügel gehalten wird.

Bewährt haben sich zudem Ausführungsformen, bei welchen das Lager zur Aufnahme einer Schwenkachse lösbar an der Brücke befestigt wird. Beispielsweise können Schraubverbindungen vorgesehen sein, mittels welcher das Lager zur Aufnahme einer Schwenkachse lösbar an der Brücke befestigt wird.

Die Brücke koppelt mechanisch den wenigstens einen ersten Stützfuß gegenüber dem wenigstens einen zweiten Stützfuß zueinander. Beispielsweise ist denkbar, dass die Brücke den wenigstens einen ersten Stützfuß gegenüber dem wenigstens einen zweiten Stützfuß in einem Winkel zwischen 0° und 90° und bevorzugt zwischen 10° und 35° geneigt zueinander mechanisch koppelt. Insbesondere kann es sein, dass die Brücke den wenigstens einen ersten Stützfuß gegenüber dem wenigstens einen zweiten Stützfuß in einem Winkel geneigt zueinander mechanisch koppelt, der nicht mehr als 25° und nicht weniger als 15° beträgt.

In vorstellbaren Ausführungsformen kann die Brücke wenigstens zwei Gehäuseteile umfassen, wobei die Gehäuseteile zur mechanischen Koppelung miteinander verbunden werden und hierbei den wenigstens einen ersten Stützfuß und/oder den wenigstens einen zweiten Stützfuß formschlüssig aufnehmen.

Im Folgenden sollen Ausführungsbeispiele der Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt einen bereits aus dem Stand der Technik bekannten Horizontaltracker;
Figur 2 zeigt einen Träger des Horizontaltrackers aus Figur 1;
Figur 3 zeigt eine schematische Perspektivansicht einer ersten Ausführungsform einer erfindungsgemäßen Trageinrichtung sowie eine erste Ausführungsform einer erfindungsgemäßen Photovoltaikaufstellung;
Figur 4 zeigt die Trageinrichtung der Ausführungsform aus Figur 3 unter Verdeutlichung weiterer Aspekte;
Figur 5 zeigt einzelne Schritte, wie sie bei einer denkbaren Ausführungsform des erfindungsgemäßen Verfahrens vorgesehen sein können;
Figur 6 zeigt eine schematische Draufsicht auf eine Ausführungsform einer Trageinrichtung unter Verdeutlichung weiterer Aspekte;
Figur 7 zeigt eine schematische Ansicht einer weiteren Ausführungsform einer erfindungsgemäßen Trageinrichtung;
Figur 8 zeigt die Ausführungsform einer Trageinrichtung aus Figur 7 unter Verdeutlichung weiterer Aspekte;
Figur 9 zeigt einzelne Schritte, wie sie bei einer denkbaren Ausführungsform des erfindungsgemäßen Verfahrens vorgesehen sein können.

Für gleiche oder gleich wirkende Elemente der Erfindung werden in den Figuren jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsvarianten stellen lediglich Beispiele dar, wie die Erfindung ausgestaltet sein kann und stellen keine abschließende Begrenzung dar.

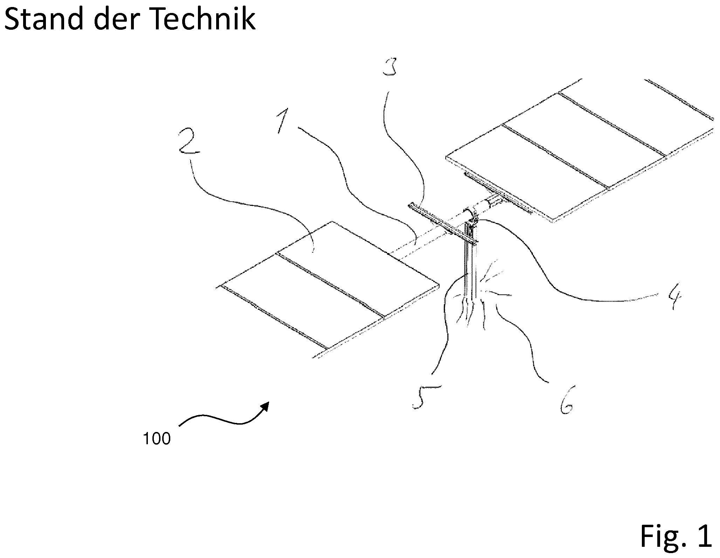

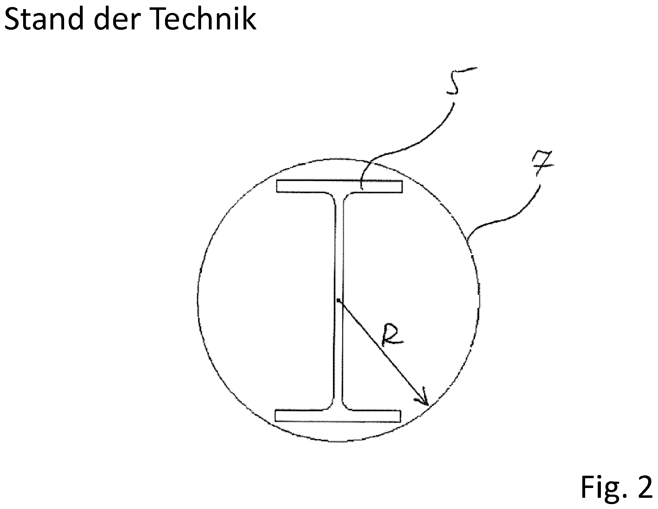

Figur 1 zeigt einen bereits aus dem Stand der Technik bekannten Horizontaltracker 100. Zu erkennen ist ein Teilbereich einer Schwenkachse 1, die von einem Lager 4 gehalten wird. Das Lager 4 ist an einem Bodenfundament, hier einem IPE-Träger 5 befestigt. Weiter sind Solarmodule 2 zu erkennen, die mittels Modulträger 3 an der Schwenkachse 1 befestigt sind. Die in Figur 2 gezeigte Ausgestaltung betrifft einen gängigen Aufbau für Horizontaltracker 100, wobei sich die dargestellte Lagerung über die Gesamtlänge der Schwenkachse 1 mehrfach wiederholt (hier nicht dargestellt). Als Bodenfundamente werden, wie hier dargestellt, IPE-Träger 5 oder materialsparende Blechprofile in eine Bodenfläche 6 gerammt.

Figur 2 zeigt einen Träger 5 des Horizontaltrackers 100 aus Figur 1. Dargestellt ist zudem ein Hüllkreis 7 für den IPE-Trägers 5. Sofern Bodenverhältnisse ein direktes Rammen der IPE-Träger 5 in eine Bodenfläche 6 nicht zulassen, müssen bei aus dem Stand der Technik bekannten Verfahren entsprechende Bohrlöcher mit einem Hüllkreisradius R erstellt werden. Die Bohrlöcher werden anschließend rückverfüllt und verdichtet. Nachfolgend werden IPE-Träger 5 in die rückverfüllten und verdichteten Bohrlöcher eingerammt. Für Installationsarbeiten bedeutet dies einen hohen zeitlichen und finanziellen Mehraufwand.

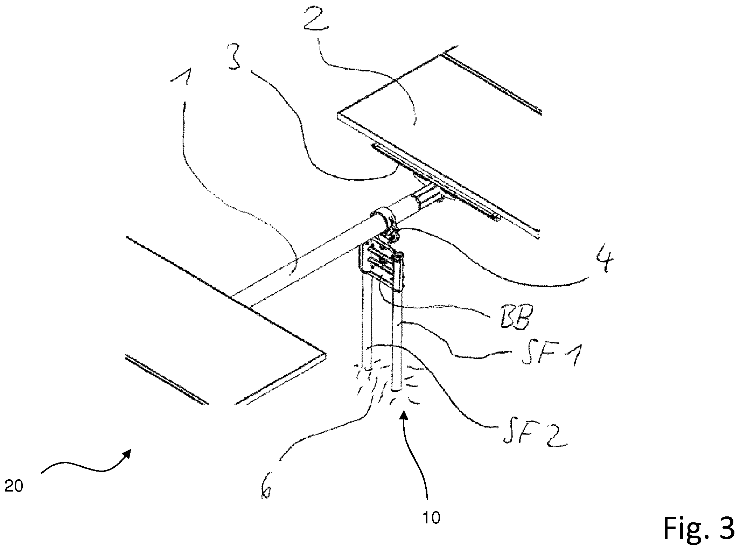

Figur 3 zeigt eine schematische Perspektivansicht einer ersten Ausführungsform einer erfindungsgemäßen Trageinrichtung 10 sowie eine erste Ausführungsform einer erfindungsgemäßen Photovoltaikaufstellung 20.

Die Photovoltaikaufstellung 20 umfasst eine Vielzahl an Solarmodulen 2, eine Schwenkachse 1 sowie mehrere Modulträger 3, über welche die Solarmodule 2 an der Schwenkachse 1 befestigt sind. Weiter besitzt die Photovoltaikaufstellung 20 mehrere Trageinrichtungen 10, von welchen in Figur 3 eine Trageinrichtung 10 zu erkennen ist. Über die Lager 4 der mehreren Trageinrichtungen 10 ist die Schwenkachse 1 drehbeweglich aufgenommen.

Die in Figur 3 zu erkennende Trageinrichtung 10 umfasst einen ersten Stützfuß SF1 und einen zweiten Stützfuß SF2, die jeweils in einer Bodenfläche 6 verankert sind. Bei Ausführungsform aus Figur 3 sind der erste Stützfuß SF1 und der zweite Stützfuß SF2 parallel zueinander orientiert. Weiter ist eine Brücke BB zu erkennen, welche den ersten Stützfuß SF1 und den zweiten Stützfuß SF2 mechanisch aneinander koppelt und hierbei in ihrer relativen Orientierung zueinander hält. Über das Lager 4 ist, wie vorhergehend bereits erwähnt, die Schwenkachse 1 aufgenommen. Weiter wird das Lager 4 von der Brücke BB getragen. Sowohl der erste Stützfuß SF1 als auch der zweite Stützfuß SF2 sind lösbar mit der Brücke BB verbunden bzw. lösbar an der Brücke BB festgesetzt. Auch wird das Lager 4 lösbar an der Brücke BB gehalten bzw. kann von der Brücke BB abgenommen werden.

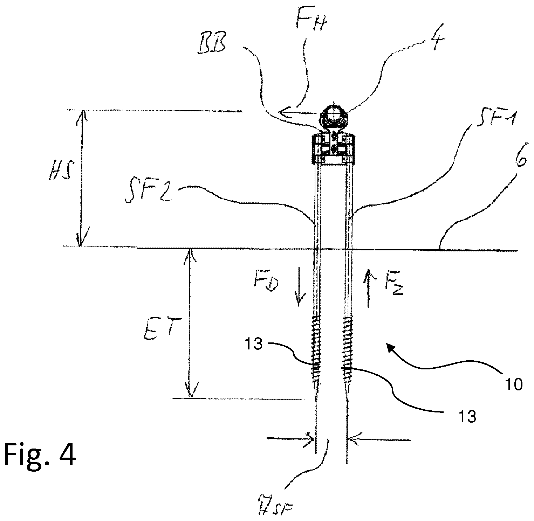

Figur 4 zeigt die Trageinrichtung 10 der Ausführungsform aus Figur 3 unter Verdeutlichung weiterer Aspekte.

Bedingt durch den Aufbau von einachsigen Horizontaltrackern ist eine Hauptbelastungsrichtung FH horizontal auf das Drehlager 4 in einer Höhe HS, welche die Schwenkachse 1 gegenüber der Bodenfläche 6 besitzt, wirkend. Bei der Trageinrichtung 10 wandelt die den ersten und den zweiten Stützfuß SF1 und SF2 mechanisch koppelnde Brücke BB diese Lasten in Druck- und Zugkräfte FD und FZ um, welche der erste Stützfuß SF1 und der zweite Stützfuß SF2 in einem Abstand ASF in die Bodenfläche 6 einleiten können. Eine Einbettungstiefe ET des ersten Stützfußes SF1 und des zweiten Stützfußes SF2 kann den Bodengegebenheiten angepasst werden. Zum Einbringen bzw. Eindrehen des ersten Stützfußes SF1 und des zweiten Stützfußes SF2 in die Bodenfläche 6 bilden der erste Stützfuß SF1 und der zweite Stützfuß SF2 jeweils an ihrem in Richtung weg der Brücke BB weisenden freien Endbereich ein Gewinde 13 aus. Der erste Stützfuß SF1 und der zweite Stützfuß SF2 sind bei Ausführungsform aus Figur 4 parallel zueinander orientiert bzw. werden bei Ausführungsform aus Figur 4 via die Brücke BB parallel zueinander orientiert mechanisch gekoppelt.

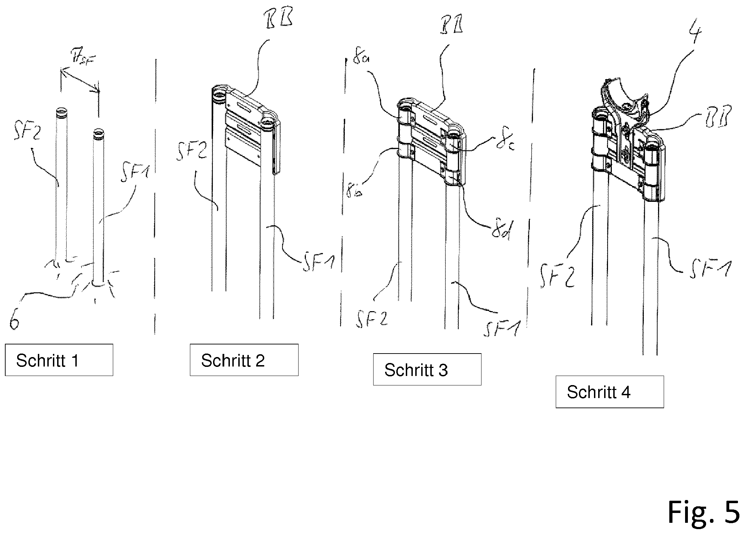

Figur 5 zeigt einzelne Schritte, wie sie bei einer denkbaren Ausführungsform des erfindungsgemäßen Verfahrens vorgesehen sein können.

Schritt 1: Ein erster Stützfuß SF1 und ein zweiter Stützfuß SF2 werden in mit bestimmtem relativem Abstand ASF zueinander in eine Bodenfläche 6 eingebracht bzw. in einer Bodenfläche 6 verankert. Die in der Bodenfläche 6 verankerten bzw. die in die Bodenfläche 6 eingebrachten Stützfüße SF1 und SF2 sind sodann parallel zueinander orientiert und ragen mit etwa gleichem Betrag ihrer jeweiligen Längserstreckung aus der Bodenfläche 6 hervor. Die Stützfüße SF1 und SF2 verfügen jeweils über ein Gewinde 13 (vgl. Figur 4). Zur Verankerung bzw. zum Einbringen in die Bodenfläche 6 werden der erste Stützfuß SF1 und der zweite Stützfuß SF2 in die Bodenfläche 6 eingedreht.

Schritte 2 und 3: Der erste in der Bodenfläche 6 verankerte Stützfuß SF1 und der zweite in der Bodenfläche 6 verankerte Stützfuß SF2 werden über eine Brücke BB mechanisch aneinander gekoppelt. Die Brücke BB hält den ersten in der Bodenfläche 6 verankerten Stützfuß 6 gegenüber dem zweiten in der Bodenfläche 6 verankerten Stützfuß SF2 in ihrer relativen Position zueinander. Zur mechanischen Koppelung sind Klemmbügel 8a bis 8d vorgesehen, über welche der erste Stützfuß SF1 und der zweite Stützfuß SF2 an der Brücke BB kraftbeaufschlagt festgesetzt werden.

Schritt 4: Ein Lager 4 wird an der Brücke BB befestigt. Schritt 4 erfolgt zeitlich nach den Schritten 1 bis 3. Das Lager 4 kann beispielsweise über Schraubverbindungen an der Brücke BB befestigt werden.

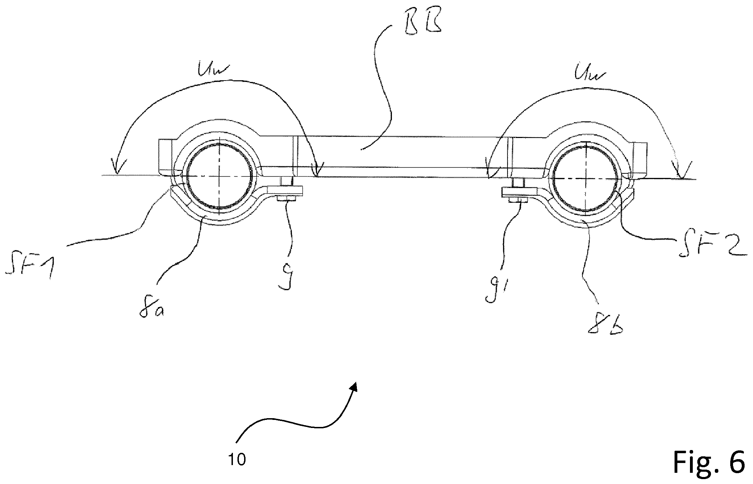

Figur 6 zeigt eine schematische Draufsicht auf eine Ausführungsform einer Trageinrichtung 10 unter Verdeutlichung weiterer Aspekte. Der erste Stützfuß SF1 und der zweite Stützfuß SF2 sind jeweils als Hohlrohre ausgebildet und besitzen einen kreisrunden Querschnitt. Figur 6 lässt erkennen, dass eine Mantelfläche des ersten Stützfußes SF1 und eine Mantelfläche des zweiten Stützfußes SF2 entlang ihres Umfang um mehr als 90° bzw. zumindest näherungsweise 180° an der Brücke BB anliegen. Der erste Stützfuß SF1 und der zweite Stützfuß SF2 sind somit formschlüssig via die Brücke BB aufgenommen. Weiter werden der erste Stützfuß SF1 und der zweite Stützfuß SF2 mittels der Klemmbügel 8a bis 8d an der Brücke BB gehalten. Durch die formschlüssige Aufnahme des ersten Stützfußes SF1 und des zweiten Stützfußes SF2 mittels der Brücke BB sind die Klemmbügel 8a bis 8d sowie die zur Fixierung der Klemmbügel 8a bis 8d an der Brücke BB vorgesehenen Schraubverbindungen 9 und 9' lediglich gering belastet.

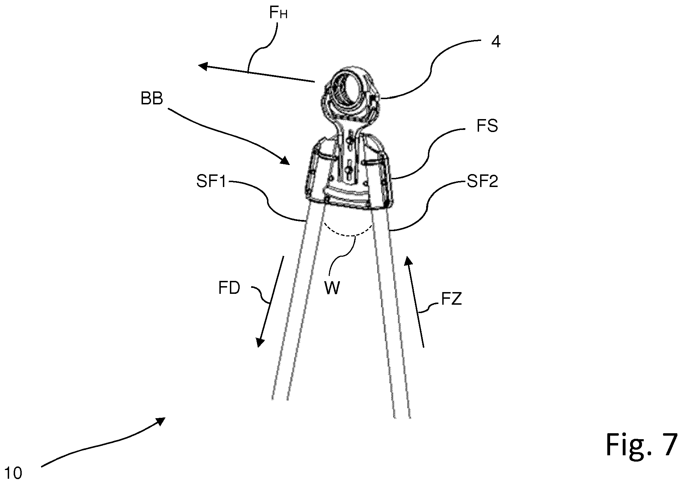

Figur 7 zeigt eine schematische Ansicht einer weiteren Ausführungsform einer erfindungsgemäßen Trageinrichtung 10. Der erste Stützfuß SF1 und der zweite Stützfuß SF2 werden durch die Brücke BB derart mechanisch aneinander gekoppelt, dass der erste Stützfuß SF1 und der zweite Stützfuß SF2 zusammen mit der Brücke BB eine A-Form ausbilden. Der erste Stützfuß SF1 bzw. eine Längsachse des ersten Stützfußes SF1 und der zweite Stützfuß SF2 bzw. eine Längsachse des zweiten Stützfußes SF2 schließen hierbei miteinander einen Winkel W ein, welcher nicht kleiner als 15° und nicht größer als 25° ausgebildet ist.

Die Brücke BB umfasst im Ausführungsbeispiel aus Figur 7 eine zweiteilige Formschale FS, welche aus korrespondierend zueinander ausgebildeten Formschalenhälften gebildet ist und mittels welcher Formschale FS der erste Stützfuß SF1 und der zweite Stützfuß SF2 formschlüssig aufgenommen werden können.

Oberhalb der Formschale FS ist ein Drehlager 4 für eine nicht abgebildete Schwenkachse 1 angeordnet. Da bei denkbaren Einsätzen für die erfindungsgemäße Trageinrichtung 10 hohe Seitenkräfte auftreten, kann hieraus beispielsweise die in Figur 7 dargestellte Hauptbelastungsrichtung FH resultieren. Mittels der in A-Form stehenden Stützfüße SF1 und SF2 können die Seitenkräfte, welche auf die Stützfüße SF1 und SF2 verbindende Formschale FS eingeleitet werden, in Zug- und Druckkräfte FZ und FD umgewandelt werden, so dass sich eine große Stabilität der gesamten Trageinrichtung 10 ergibt.

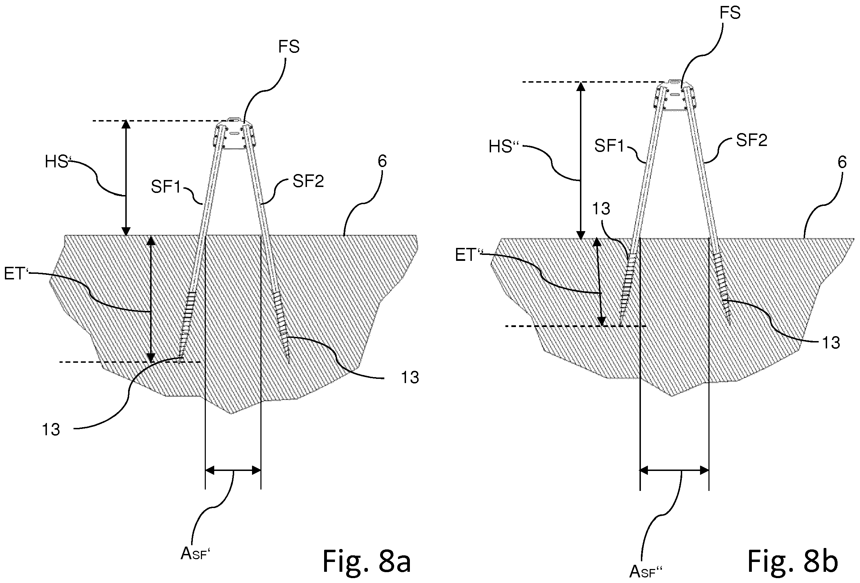

Figur 8 zeigt die Ausführungsform einer Trageinrichtung 10 aus Figur 7 unter Verdeutlichung weiterer Aspekte. Insbesondere zeigen die Figuren 8a und 8b unterschiedliche Möglichkeiten des Aufstellens bzw. Einbringens einer Ausführungsform einer erfindungsgemäßen Trageinrichtung 10 in eine Bodenfläche 6. In Fig. 8a besitzen der erste Stützfuß SF1 und der zweite Stützfuß SF2 eine große Einbindetiefe ET', welche beispielsweise auf Grund von bestimmten Bodenverhältnissen gemäß Figur 8a notwendig sein kann, um eine Photovoltaikaufstellung 20 (vgl. Figur 3) stabil zu lagern. Durch die große Einbindetiefe ET' der Stützfüße SF1 und SF2 in die Bodenfläche 6 ergibt sich eine niedrigere Höhe der Schwenkachse HS' sowie eine geringere Basis A_{SF}' der Stützfüße SF1 und SF2 im Bereich der Bodenfläche 6. Ist nun, wie in Fig. 8b gezeigt, eine geringere Einbindetiefe ET" in den Boden 6 ausreichend, weist die Schwenkachse 1 eine größere Höhe HS" auf. Dadurch ergibt sich eine im Vergleich zu Fig. 8a größere Basis A_{SF}" der Stützfüße SF1 und SF2 im Bereich der Bodenfläche 6. Ein technischer Effekt der Trageinrichtung 10 gemäß Ausführungsform aus Figuren 8a und 8b besteht somit darin, dass sich bei einer Erhöhung des Abstandes der Schwenkachse 1 vom Boden HS' auf HS" auch die Breite der Basis A_{SF}' auf A_{SF}" erhöht. Bei einer variablen Einbindetiefe der Stützfüße SF1 und SF2 sind dennoch kaum Änderungen in der Statik notwendig. Die statischen Verhältnisse der Trageeinrichtung 10 bleiben dabei annähernd gleich, während bei gleichmäßigen Profilen, wie beispielsweise IPE-Profilen, die Grenzen der Statik schnell überschnitten werden.

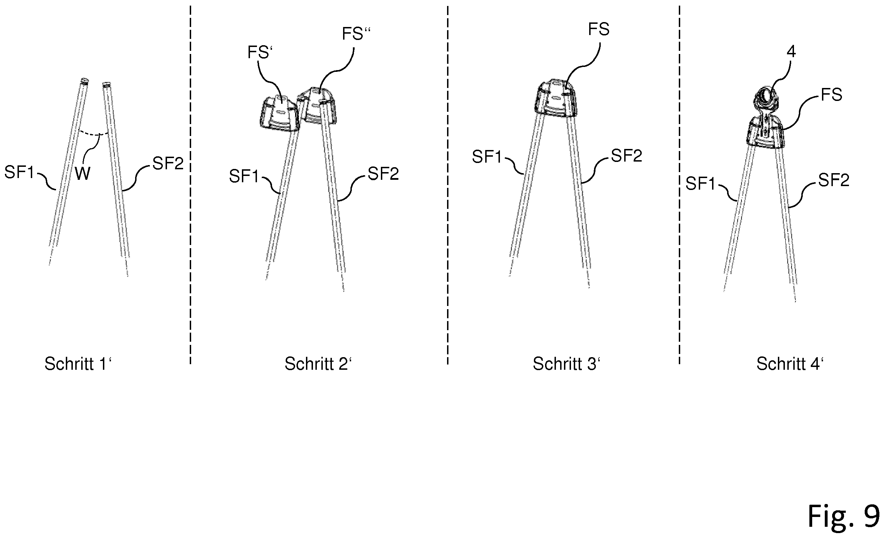

Figur 9 zeigt einzelne Schritte, wie sie bei einer denkbaren Ausführungsform des erfindungsgemäßen Verfahrens vorgesehen sein können. Insbesondere zeigt Figur 9 ein Verfahren zum Aufstellen einer für Schwenkachsen 1 von Solarmodulen 2 vorgesehenen Ausführungsform einer Trageinrichtung 10 gemäß Figur 7.

Schritt 1': ein erster Stützfuß SF1 und ein zweiter Stützfuß SF2 werden in eine Bodenfläche 6 eingedreht, sodass sie einen Winkel W von etwa 20° miteinander einschließen. Der erste Stützfuß SF1 sowie der zweite Stützfuß SF2 bilden hierzu jeweils ein Gewinde 13 aus (vgl. Figur 8).

Schritt 2': die beiden Formschalenhälften FS' und FS" werden zur Verbindung der Schraubfundamente SF1 und SF2 angebracht.

Schritt 3': Die zwei miteinander korrespondierende Formschalenhälften FS' und FS" der Brücke BB werden miteinander verschraubt, vernietet, oder in einer anderen Weise miteinander verbunden, sodass der erste Stützfuß SF1 und der zweite Stützfuß SF2 über die Brücke BB bzw. über die zwei miteinander korrespondierenden Formschalenhälften FS' und FS" mechanisch aneinander gekoppelt sind.

Schritt 4': an der Brücke BB bzw. den zwei miteinander korrespondierenden Formschalenhälften FS' und FS" wird das Lager 4 befestigt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Schwenkachse
- 2: Solarmodul
- 3: Modulträger
- 4: Lager
- 5: IPE-Träger
- 6: Bodenoberfläche
- 7: Hüllkreis
- 8: Klemmbügel
- 9: Schraubverbindung
- 10: Trageinrichtung
- 13: Gewinde
- 20: Photovoltaiksaufstellung
- 100: Horizontaltracker
- BB: Brücke
- SF1: Schraubfundament 1
- SF2: Schraubfundament 2
- ASF: Abstand
- ET: Einbindetiefe
- FH: Hauptbelastungsrichtung
- FD: Druckkraft
- FZ: Zugkraft
- HS: Höhe Schwenkachse

- FS: Formschale
- FS': Formschalenhälfte
- FS": Formschalenhälfte
- W: Winkel
- HS': Höhe Schwenkachse
- HS": Höhe Schwenkachse
- ASF: Abstand Schraubfundamente
- ASF": Abstand Schraubfundamente
- ET': Einbindetiefe
- ET": Einbindetiefe

## Patentansprüche

1. Aus mehreren Teilen gebildete Trageinrichtung (10) für Schwenkachsen (1) von Solarmodulen (2), aufweisend
- wenigstens einen ersten Stützfuß (SF1) und wenigstens einen zweiten Stützfuß (SF2), die jeweils zu Verankerung in einer Bodenfläche (6) ausgebildet sind;
- eine Brücke (BB), welche den wenigstens einen ersten Stützfuß (SF1) mechanisch an den wenigstens einen zweiten Stützfuß (SF2) koppelt sowie
- ein Lager (4), welches zur Aufnahme einer Schwenkachse (1) ausgebildet ist,
- wobei das Lager (4) von der Brücke (BB) getragen wird und wobei der wenigstens eine erste Stützfuß (SF1) und der wenigstens eine zweite Stützfuß (SF2) lösbar mit der Brücke (BB) verbunden sind, und
- wobei die Brücke (BB) den wenigstens einen ersten Stützfuß (SF1) gegenüber dem wenigstens einen zweiten Stützfuß (SF2) geneigt zueinander mechanisch koppelt,
**dadurch gekennzeichnet, dass**
- der wenigstens eine erste Stützfuß (SF1) und/oder der wenigstens eine zweite Stützfuß (SF2) jeweils an ihrem in Richtung weg der Brücke (BB) weisenden freien Endbereich ein Gewinde (13) ausbilden.

2. Trageinrichtung nach Anspruch 1, umfassend mindestens einen an der Brücke (BB) befestigbaren Klemmbügel (8a, 8b, 8c, 8d), über welchen der wenigstens eine erste Stützfuß (SF1) und/oder der wenigstens eine zweite Stützfuß (SF2) kraftbeaufschlagt an der Brücke (BB) festgesetzt werden kann.

3. Trageinrichtung nach Anspruch 2, umfassend mindestens ein vorzugsweise als Schraubverbindung ausgebildetes Fixierungsmittel, mittels dessen der mindestens eine Klemmbügel (8a, 8b, 8c, 8d) zur kraftbeaufschlagten Festsetzung des wenigstens einen ersten Stützfußes (SF1) und/oder des wenigstens einen zweiten Stützfußes (SF2) an der Brücke (BB) in einer bestimmten Klemmposition gehalten werden kann.

4. Trageinrichtung nach einem der Ansprüche 1 bis 3, bei welcher das Lager (4) lösbar an der Brücke (BB) festgesetzt ist.

5. Trageinrichtung nach Anspruch 4, bei welcher das Lager (4) via mindestens eine Schraubverbindung lösbar an der Brücke (BB) festgesetzt ist.

6. Trageinrichtung nach einem der Ansprüche 1 bis 5, bei welcher der wenigstens eine erste Stützfuß (SF1) und der wenigstens eine zweite Stützfuß (SF2) bei geneigter mechanischer Koppelung miteinander einen Winkel einschließen, welcher zwischen 0° und 90° und bevorzugt zwischen 10° und 35° festgesetzt ist.

7. Trageinrichtung nach Anspruch 6, bei welcher der Winkel nicht mehr als 25° und nicht weniger als 15° beträgt.

8. Trageinrichtung nach einem der voranstehenden Ansprüche 1 bis 7, bei welcher die Brücke (BB) als aus wenigstens zwei Gehäuseteilen umfassende Formschale (FS) ausgebildet ist, welche wenigstens zwei Gehäuseteile eine korrespondierende Aufnahme zur formschlüssigen Verbindung des wenigstens einen ersten Stützfußes (SF1) und/oder des wenigstens einen zweiten Stützfußes (SF2) mit der Formschale (FS) bereitstellen.

9. Photovoltaikaufstellung (20), umfassend eine Vielzahl an Solarmodulen (2), mindestens eine Schwenkachse (1), an welchen die Solarmodule (2) fixiert sind sowie mehrere Trageinrichtungen (10) gemäß einem oder mehreren der Ansprüche 1 bis 8, wobei die mindestens eine Schwenkachse (1) via die Lager (4) der Trageinrichtungen (10) aufgenommen ist.

10. Verfahren zum Aufstellen einer für Schwenkachsen (1) von Solarmodulen (2) vorgesehenen Trageinrichtung (10), das Verfahren umfassend folgende Schritte:
- Verankern wenigstens eines ersten Stützfußes (SF1) in einer Bodenfläche (6),
- Verankern wenigstens eines zweiten Stützfußes (SF2) in der Bodenfläche (6),
- mechanisches Koppeln des wenigstens einen ersten in der Bodenfläche (6) verankerten Stützfußes (SF1) mit dem wenigstens einen zweiten in der Bodenfläche (6) verankerten Stützfußes (SF2) über eine Brücke (BB), welche ein Lager (4) zur Aufnahme einer Schwenkachse (1) trägt und/oder an welche ein Lager (4) zur Aufnahme einer Schwenkachse (1) befestigt wird,
- wobei die Brücke (BB) den wenigstens einen ersten Stützfuß (SF1) gegenüber dem wenigstens einen zweiten Stützfuß (SF2) geneigt zueinander mechanisch koppelt, **dadurch gekennzeichnet, dass** der wenigstens eine erste Stützfuß (SF1) und/oder der wenigstens eine zweite Stützfuß (SF2) jeweils an ihrem in Richtung weg der Brücke (BB) weisenden freien Endbereich ein Gewinde (13) ausbilden, über welches jeweilige Gewinde (13) der wenigstens eine erste Stützfuß (SF1) und/oder der wenigstens eine zweite Stützfuß (SF2) zur Verankerung in die Bodenfläche (6) eingedreht werden.

11. Verfahren nach Anspruch 10, bei welchem zur mechanischen Koppelung mindestens ein Klemmbügel (8a, 8b, 8c, 8d) an der Brücke (BB) festgesetzt wird, woraus resultierend der wenigstens eine erste Stützfuß (SF1) und/oder der wenigstens eine zweite Stützfuß (SF2) kraftbeaufschlagt über den mindestens einen an der Brücke (BB) festgesetzten Klemmbügel (8a, 8b, 8c, 8d) gehalten wird.

12. Verfahren nach einem der Ansprüche 10 oder 11, bei welchem das Lager (4) zur Aufnahme einer Schwenkachse (1) lösbar an der Brücke (BB) befestigt wird.

13. Verfahren nach einem der Ansprüche 10 bis 12, bei welchem die Brücke (BB) den wenigstens einen ersten Stützfuß (SF1) gegenüber dem wenigstens einen zweiten Stützfuß (SF2) in einem Winkel zwischen 0° und 90° und bevorzugt zwischen 10° und 35° geneigt zueinander mechanisch koppelt.

14. Verfahren nach Anspruch 13, bei welchem die Brücke (BB) den wenigstens einen ersten Stützfuß (SF1) gegenüber dem wenigstens einen zweiten Stützfuß (SF2) in einem Winkel geneigt zueinander mechanisch koppelt, der nicht mehr als 25° und nicht weniger als 15° beträgt.

15. Verfahren nach einem der Ansprüche 10 bis 14, bei welchem die Brücke (BB) wenigstens zwei Gehäuseteile umfasst, wobei die Gehäuseteile zur mechanischen Koppelung miteinander verbunden werden und hierbei den wenigstens einen ersten Stützfuß (SF1) und/oder den wenigstens einen zweiten Stützfuß (SF2) formschlüssig aufnehmen.

## Claims

1. Support device (10) for pivot axes (1) of solar modules (2) that is formed from a plurality of parts featuring
- at least one first support stand (SF1) and at least one second support stand (SF2), each of which is designed to be anchored in a ground area (6);
- a bridge (BB) mechanically coupling said at least one first support stand (SF1) to said at least one second support stand (SF2), and
- a bearing (4) which is designed to receive a pivot axis (1),
- wherein the bearing (4) is supported by the bridge (BB) and wherein the at least one first support stand (SF1) and the at least one second support stand (SF2) are releasably connected to the bridge (BB),
- wherein the bridge (BB) mechanically couples the at least one first support stand (SF1) to the at least one second support stand (SF2) which are inclining relative to one another,
**characterized in that**
- the at least one first support stand (SF1) and/or the at least one second support stand (SF2) respectively form a thread (13) at their free end region pointing away from the bridge (BB).

2. Support device according to claim 1, comprising at least one clamping bracket (8a, 8b, 8c, 8d) which can be mounted on the bridge (BB) and via which the at least one first support stand (SF1) and/or the at least one second support stand (SF2) can be mounted on the bridge (BB) in a force-actuated manner.

3. Support device according to claim 2, comprising at least one fixing means, preferably in the form of a screw connection, by means of which the at least one clamping bracket (8a, 8b, 8c, 8d) can be held in a specific clamping position for the force-actuated attachment of the at least one first support stand (SF1) and/or the at least one second support stand (SF2) to the bridge (BB).

4. Support device according to one of the claims 1 to 3, in which the bearing (4) is releasably attached to the bridge (BB).

5. Support device according to claim 4, in which the bearing (4) is releasably attached to the bridge (BB) via at least one screw connection.

6. Support device according to one of the claims 1 to 5, in which the at least one first support stand (SF1) and the at least one second support stand (SF2) which are mechanically coupled inclining towards each other enclose an angle which is set between 0° and 90°, preferably between 10° and 35°.

7. Support device according to claim 6, in which the angle is not more than 25° and not less than 15°.

8. Support device according to one of the previous claims 1 to 7, whereby the bridge (BB) is designed as a mold shell (FS) comprising at least two housing parts, which at least two housing parts provide a corresponding receptacle for the form-fitting connection of the at least one first support stand (SF1) and/or the at least one second support stand (SF2) to the mold shell (FS).

9. Photovoltaic setup (20), comprising a plurality of solar modules (2), at least one pivot axis (1) to which the solar modules (2) are fixed, and a plurality of support devices (10) in accordance with one or more of claims 1 to 8, wherein the at least one pivot axis (1) is received by the bearings (4) of the support devices (10).

10. Method for mounting a support device (10) which is provided for pivot axes (1) of solar modules (2), the method comprising the following steps:
- anchoring at least one first support stand (SF1) in a ground area (6),
- anchoring at least one second support stand (SF2) in the ground area (6),
- mechanically coupling the at least one first support stand (SF1), which is anchored to the ground area (6), to the at least one second support stand (SF2), which is anchored to the ground area (6), via a bridge (BB), which bridge (BB) carries a bearing (4) for receiving a pivot axis (1) and/or to which bridge (BB) a bearing (4) for receiving a pivot axis (1) is getting attached,
- wherein the bridge (BB) mechanically couples the at least one first support stand (SF1) with respect to the at least one second support stand (SF2) so that they are inclined relative to one another, **characterized in that** the at least one first support stand (SF1) and/or the at least one second support stand (SF2) each form a thread (13) at their free end region pointing away from the bridge (BB), via which respective thread (13) the at least one first support stand (SF1) and/or the at least one second support stand (SF2) are screwed into the ground area (6) for the purpose of anchorage.

11. Method according to claim 10, in which at least one clamping bracket (8a, 8b, 8c, 8d) is mounted to the bridge (BB) for mechanical coupling, as a result of which the at least one first support stand (SF1) and/or the at least one second support stand (SF2) is held in a force-actuated manner via the at least one clamping bracket (8a, 8b, 8c, 8d) mounted to the bridge (BB).

12. Method according to one of the claims 10 to 11, in which the bearing (4) for receiving a pivot axis (1) is releasably attached to the bridge (BB).

13. Method according to one of the claims 10 to 12, in which the bridge (BB) mechanically couples the at least one first support stand (SF1) to the at least one second support stand (SF2) which are inclined relative to one another at an angle between 0° and 90° and preferably between 10° and 35°.

14. Method according to claim13, in which the bridge (BB) mechanically couples the at least one first support stand (SF1) to the at least one second support stand (SF2) which are inclined relative to one another at an angle which is not more than 25° and not less than 15°.

15. Method according to one of the claims 10 to 14, in which the bridge (BB) comprises at least two housing parts, the housing parts being connected to one another for mechanical coupling and thereby accommodating the at least one first support stand (SF1) and/or the at least one second support stand (SF2) in a form-fitting manner.

## Revendications

1. Dispositif support (10), constitué de plusieurs pièces, pour axes de pivotement (1) de modules solaires (2), présentant
- au moins un premier pied d'appui (SF1) et au moins un deuxième pied d'appui (SF2), qui sont chacun réalisés pour être ancrés dans une surface d'un sol (6) ;
- un pont (BB) qui arrime mécaniquement ledit au moins un premier pied d'appui (SF1) audit au moins un deuxième pied d'appui (SF2) ainsi
- qu'une bague (4), qui est réalisée pour loger un axe de pivotement (1),
- ladite bague (4) étant portée par le pont (BB) et ledit au moins un premier pied d'appui (SF1) et ledit au moins un deuxième pied d'appui (SF2) étant reliés de manière détachable au pont (BB), et
- le pont (BB) arrimant mécaniquement ledit au moins un premier pied d'appui (SF1) audit au moins un deuxième pied d'appui (SF2), en inclinaison l'un vers l'autre,
**caractérisé en ce que**
- ledit au moins un premier pied d'appui (SF1) et/ou ledit au moins un deuxième pied d'appui (SF2) réalisent un filetage (13) respectivement à leur zone d'extrémité libre tournée dans le sens opposé au pont (BB).

2. Dispositif support selon la revendication 1, comprenant au moins un étrier de serrage (8a, 8b, 8c, 8d) pouvant être fixé au pont (BB), par le biais duquel étrier de serrage ledit au moins un premier pied d'appui (SF1) et/ou ledit au moins un deuxième pied d'appui (SF2) peut/peuvent être rattaché(s) au pont (BB) sous l'application d'une force.

3. Dispositif support selon la revendication 2, comprenant au moins un moyen de fixation réalisé de préférence en tant que liaison à vis au moyen de laquelle ledit au moins un étrier de serrage (8a, 8b, 8c, 8d) peut être maintenu dans une position de serrage définie pour le rattachement, sous application d'une force, dudit au moins un premier pied d'appui (SF1) et/ou dudit au moins un deuxième pied d'appui (SF2) au pont (BB).

4. Dispositif support selon l'une quelconque des revendications 1 à 3, dans lequel la bague (4) est rattachée au pont (BB) de manière détachable.

5. Dispositif support selon la revendication 4, dans lequel la bague (4) est rattachée de manière détachable au pont (BB) par le biais d'au moins une liaison à vis.

6. Dispositif support selon l'une quelconque des revendications 1 à 5, dans lequel ledit au moins un premier pied d'appui (SF1) et ledit au moins un deuxième pied d'appui (SF2), avec un arrimage mécanique l'un à l'autre en inclinaison, contiennent un angle qui est fixé entre 0° et 90° et de préférence entre 10° et 35°.

7. Dispositif support selon la revendication 6, dans lequel l'angle n'est pas supérieur à 25° et pas inférieur à 15°.

8. Dispositif support selon l'une quelconque des revendications précédentes 1 à 7, dans lequel le pont (BB) est réalisé en tant que coque (FS) comprenant au moins deux parties de boîtier, lesquelles au moins deux parties de boîtier fournissent un logement correspondant à la liaison mécanique par complémentarité de forme dudit au moins un premier pied d'appui (SF1) et/ou dudit au moins un deuxième pied d'appui (SF2) à la coque (FS).

9. Installation photovoltaïque (20), comprenant une pluralité de modules solaires (2), au moins un axe de pivotement (1) sur lequel sont fixés les modules solaires (2) ainsi que plusieurs dispositifs support (10) selon l'une quelconque ou plusieurs des revendications 1 à 8, ledit au moins un axe de pivotement (1) étant logé par le biais des bagues (4) des dispositifs support (10).

10. Procédé d'installation d'un dispositif support (10) prévu pour des axes de pivotement (1) de modules solaires (2), le procédé comprenant les étapes suivantes :
- ancrage d'au moins un premier pied d'appui (SF1) dans une surface d'un sol (6),
- ancrage d'au moins un deuxième pied d'appui (SF2) dans la surface d'un sol (6),
- arrimage mécanique dudit au moins un premier pied d'appui (SF1), ancré dans la surface d'un sol (6), audit au moins un deuxième pied d'appui (SF2), ancré dans la surface d'un sol (6), par un pont (BB) qui porte une bague (4) destinée à loger un axe de pivotement (1) et/ou auquel est fixée une bague (4) destinée à loger un axe de pivotement (1),
- ledit pont (BB) arrimant mécaniquement ledit au moins un premier pied d'appui (SF1) audit au moins un deuxième pied d'appui (SF2) en inclinaison l'un vers l'autre, **caractérisé en ce que** ledit au moins un premier pied d'appui (SF1) et/ou ledit au moins un deuxième pied d'appui (SF2) réalisent chacun un filetage (13) à leur zone d'extrémité libre tournée dans le sens opposé au pont (BB), lequel filetage (13) respectif permet de visser dans la surface d'un sol (6) ledit au moins un premier pied d'appui (SF1) et/ou ledit au moins un deuxième pied d'appui (SF2) pour leur ancrage.

11. Procédé selon la revendication 10, dans lequel un étrier de serrage (8a, 8b, 8c, 8d) est rattaché au pont (BB) pour réaliser l'arrimage mécanique, dont il résulte que ledit au moins un premier pied d'appui (SF1) et/ou ledit un deuxième pied d'appui (SF2) est/sont maintenu(s), sous application d'une force, par ledit au moins un étrier de serrage (8a, 8b, 8c, 8d) rattaché au pont (BB).

12. Procédé selon l'une quelconque des revendications 10 à 11, dans lequel la bague (4), destinée à loger un axe de pivotement (1), est fixée de manière détachable au pont (BB).

13. Procédé selon l'une quelconque des revendications 10 à 12, dans lequel le pont (BB) arrime mécaniquement ledit au moins un premier pied d'appui (SF1) audit au moins un deuxième pied d'appui (SF2) en inclinaison l'un vers l'autre dans un angle d'entre 0° et 90° et de préférence entre 10° et 35°.

14. Procédé selon la revendication 13, dans lequel le pont (BB) arrime mécaniquement ledit au moins un premier pied d'appui (SF1) audit au moins un deuxième pied d'appui (SF2) en inclinaison l'un vers l'autre dans un angle qui n'est pas supérieur à 25° et pas inférieur à 15°.

15. Procédé selon l'une quelconque des revendications 10 à 14, dans lequel le pont (BB) comprend au moins deux parties de boîtier, lesdites parties de boîtier étant reliées l'une à l'autre pour réaliser le rattachement mécanique et, en même temps, logent en complémentarité de forme ledit au moins un premier pied d'appui (SF1) et/ou ledit au moins un deuxième pied d'appui (SF2).
